(19) Europäisches Patentamt
European Patent Office
Office européen des brevets

(11) Publication number: 0 383 979 A1

# (12) EUROPEAN PATENT APPLICATION

(21) Application number: 89103165.0

(22) Date of filing: 23.02.89

(51) Int. Cl.5: C08L 67/00, //(C08L67/00, 67:02,51:04,69:00),(C08L67/00, 67:02,53:02,69:00)

(43) Date of publication of application: 29.08.90 Bulletin 90/35

(84) Designated Contracting States: DE FR GB IT NL

(71) Applicant: GENERAL ELECTRIC COMPANY
1 River Road
Schenectady New York 12305(US)

(72) Inventor: Liu, Nan-I
1604 Country Club Road, D
Mt. Vernon Indiana 47620(US)

(74) Representative: Catherine, Alain
General Electric France Service de Propriété Industrielle 18 Rue Horace Vernet
F-92136 Issy-Les-Moulineaux Cedex(FR)

## (54) Elastomeric compositions.

(57) Novel thermoplastic elastomeric molding compositions having excellent physical properties, which comprise a copolyetherester resin modified with a combination of poly(butylene terephthalate), a monoalkenyl arene-conjugated diene copolymer and a polycarbonate.

EP 0 383 979 A1

# ELASTOMERIC COMPOSITIONS

Nan-I Liu

The present invention relates to novel thermoplastic elastomeric molding compositions. The compositions of the present invention exhibit excellent low temperature properties.

## BACKGROUND OF THE INVENTION

Copolyetheresters are well known and have enjoyed continued and increasing commercial success. They are available from several sources including the Hytrel® resins from E.I. DuPont and the GAFLEX® resins from GAF Corporation and are described in U.S. Patent Nos. 3,023,192; 3651,014; 3,763,109; 3,766,146; 3,784,520; 3,801,547; 4,156,774; 4,264,761 and 4,355,155, among others; all incorporated herein by reference. These are especially useful resins because they are quite varied in consistency ranging from a soft elastomer to semi-rigid plastics. As such, and because of their overall good physical properties, including superior tear strength, flex life, heat resistance, toughness, and the like they are widely useful in many different applications. They are capable of being molded into various articles by conventional plastic molding techniques including injection molding, blow molding, profile extrusion, rotomolding, and the like.

Additionally, copolyetherester resins may be modified to improve certain physical properties and further broaden their scope of application by incorporating therein various additives including fillers and reinforcing agents to enhance toughness and vary the stiffness of the material. Further, such resins and modified resins can be blended with other thermoplastic materials to enhance various physical properties and improve processability.

Polymeric blends comprising one or more thermoplastic copolyetherester elastomers, in randon or block form, and a property improving modifier combination consisting of a poly(butylene terephthalate)-polyester and a monoalkenyl arene-conjugated diene copolymer or copolymer composition.

These copolyetheresters exhibit excellent stress-strength properties, particularly low temperature impact resistance, while retaining low flexural modulus and excellent physical appearance.

However, it has now been surprisingly discovered that the low temperature properties of these polymeric blends can be substantially improved by adding to such modifier combinations a polycarbonate resin.

## SUMMARY OF THE INVENTION

In accordance with the present invention there are provided thermoplastic elastomeric compositions having excellent low temperature properties comprising:

(A) one or more thermoplastic elastomeric copolyetheresters; and

(B) from about 10 to about 85 percent by weight, and preferably about 30 to about 70 percent by weight, based on the combined weight of (A) and (B), of a modifier combination consisting essentially of:

(i) one or more poly(butylene terephthalate) homopolyesters or copolyesters;

(ii) one or more monoalkenyl arene-conjugated diene rubbery copolymer selected from the group consisting of:

(a) a block copolymer comprising at least two monoalkenyl arene polymer end blocks A and at least one hydrogenated partially hydrogenated or non-hydrogenated conjugated diene polymer mid block 6, said block copolymer having an 8 to 55 percent by weight monoalkenyl arene polymer block content, each polymer block A having an average molecular weight of between 5,000 and 125,000, and each polymer block B having an average molecular weight of between 10,000 and about 300,000; and

(b) a core-shell graft copolymer comprising a predominately conjugated diene polymer core to which is grafted a shell polymerized from one or more monomers at least one of which is a monoalkenyl arene; and

(iii) one or more polycarbonate resins; wherein (a) the poly(butylene terephthalate) comprises from about 5 to about 60, preferably from about 10 to about 30, percent by weight of the total composition; (b) the monoalkenyl arene-conjugated diene copolymer comprises from about $2\frac{1}{2}$ to about 30, preferably from

about 10 to about 15, percent by weight of the total composition; and (c) the polycarbonate resin comprises about $2\frac{1}{2}$ to about 60, preferably from about 10 to about 50, percent by weight of the total composition.

In the most preferred compositions, the poly(butylene terephthalate) (B)(i) is poly(1,4-butylene terephthalate) and the monoalkenyl arene-conjugated diene copolymer is selected from non-hydrogenated block copolymers of polystyrene-polybutadiene- polystyrene and graft copolymers of a polybutadiene core with a polymethylmethacrylate/polystyrene shell. Finally it is especially desirable to pre-compound the graft copolymer with some or all of the poly(butylene terephthalate) prior to admixing with the copolyetherester.

## DETAILED DESCRIPTION OF INVENTION

Suitable thermoplastic copolyetheresters(A) for use in this invention include both random and block copolymers. In general, these are prepared by conventional esterification/polycondensation processes from (a) one or more diols, (b) one or more dicarboxylic acids, (c) one or more long chain ether glycols, and optionally, (d) one or more caprolactones or polycaprolactones.

Diols(a) which can be used in the preparation of the copolyetheresters include both saturated and unsaturated aliphatic and cycloaliphatic dihydroxy compounds as well as aromatic dihydroxy compounds. These diols are preferably of a low molecular weight, i.e. having a molecular weight of about 300 or less. When used herein, the term "diols" and "low molecular weight diols" should be construed to include equivalent ester forming derivatives thereof, provided, however, that the molecular weight requirement pertains to the diol only and not to its derivatives. Exemplary of ester forming derivatives there may be given the acetates of the diols as well as, for example, ethylene oxide or ethylene carbonate for ethylene glycol.

Preferred saturated and unsaturated aliphatic and cycloaliphatic diols are those having from about 2 to about 19 carbon atoms. Exemplary of these diols there may be given ethylene glycol; propanediol; butanediol; pentanediol; 2-methyl propanediol; 2,2-dimethyl propanediol; hexanediol; decanediol; 2-octyl undecanediol; 1,2-, 1,3- and 1,4- dihydroxy cyclohexane; 1,2-, 1,3- and 1,4-cyclohexane dimethanol; butanediol; hexenediol, etc. Especially preferred are 1,4-butanediol and mixtures thereof with hexanediol or butenediol.

Aromatic diols suitable for use in the preparation of the thermoplastic elastomers are generally those having from about 6 to about 19 carbon atoms. Included among the aromatic dihydroxy compounds are resorcinol; hydroquinone; 1,5-dihydroxy naphthalene; 4,4′-dihydroxy diphenyl; bis(p-hydroxy phenyl)-methane and 2,2-bis(p-hydroxy phenyl) propane.

Especially preferred diols are the saturated aliphatic diols, mixtures thereof and mixtures of a saturated diol(s) with an unsaturated diol(s), wherein each diol contains from 2 to about 8 carbon atoms. Where more than one diol is employed, it is preferred that at least about 60 mole %, most preferably at least 80 mole %, based on the total diol content, be the same diol. As mentioned above, the preferred thermoplastic elastomers are those in which 1,4-butanediol is present in a predominant amount.

Dicarboxylic acids (b) which are suitable for use in the preparation of the copolyetheresters include aliphatic, cycloaliphatic, and/or aromatic dicarboxylic acids. These acids are preferably of a low molecular weight, i.e., having a molecular weight of less than about 350; however, higher molecular weight dicarboxylic acids, especially dimer acids, may also be used. The term "dicarboxylic acids" as used herein, includes equivalents of dicarboxylic acids having two functional carboxyl groups which perform substantially like dicarboxylic acids in reaction with glycols and diols in forming polyester polymers. These equivalents include ester and ester-forming derivatives, such as acid halides and anhydrides. Additionally, the dicarboxylic acids may contain any substituent group(s) or combinations which do not substantially interfere with the polymer formation and use of the polymer in the practice of this invention.

Aliphatic dicarboxylic acids, as the term is used herein, refers to carboxylic acids having two carboxyl groups each of which is attached to a saturated carbon atom. If the carbon atom to which the carboxyl group is attached is saturated and is in a ring, the acid is cycloaliphatic.

Aromatic dicarboxylic acids, as the term is used herein, are dicarboxylic acids having two carboxyl groups each of which is attached to a carbon atom in an isolated or fused benzene ring system. It is not necessary that both functional carboxyl groups be attached to the same aromatic ring and where more than one ring is present, they can be joined by aliphatic or aromatic divalent radicals or divalent radicals such as -O- or $-SO_2-$.

Representative aliphatic and cycloaliphatic acids which can be used are sebacic acid, 1,2-cyclohexane dicarboxylic acid, 1,3-cyclohexane dicarboxylic acid, 1,4-cyclohexane dicarboxylic acid, adipic acid, glutaric

acid, succinic acid, oxalic acid, azelaic acid, diethymalonic acid, allylmalonic acid, dimer acid, 4-cyclohexene-1,2-dicarboxylic acid, 2-ethylsuberic acid, tetramethylsuccinic acid, cyclopentane dicarboxylic acid, decahydro-1, 5-napthalene dicarboxylic acid, 4,4′- bicyclohexyl dicarboxylic acid, decahydro-2,6-napthalene dicarboxylic acid, 4,4 methylenebis-(cyclohexane carboxylic acid), 3,4-furan dicarboxylic acid, and 1,1-cyclobutane dicarboxylic acid. Preferred aliphatic acids are cyclohexane dicarboxylic acids, sebacic acid, dimer acid, glutaric acid, azelaic acid and adipic acid.

Representative aromatic dicarboxylic acids which can be used include terephthalic, phthalic and isophthalic acids, bi-benzoic acid, substituted dicarboxy compounds with two benzene nuclei such as bis(p-carboxyphenyl) methane, oxybis(benzoic acid), ethylene-1,2-bis-(p-oxybenzoic acid), 1,5-napthalene dicarboxylic acid, 2,6-napthalene dicarboxylic acid, 2,7-napthalene dicarboxylic acid, phenanthrene dicarboxylic acid, anthracene dicarboxylic acid, 4,4′-sulfonyl diberzoic acid, and halo and $C_1$-$C_{12}$ alkyl, alkoxy, and aryl ring substitution derivatives thereof. Hydroxy acids such as p(-hydroxyethoxy)benzoic acid can also be used provided an aromatic dicarboxylic acid is also present.

Preferred dicarboxylic acids for the preparation of the copolyetheresters are the aromatic dicarboxylic acids, mixtures thereof and mixtures of one or more dicarboxylic acid with an aliphatic and/or cycloaliphatic dicarboxylic acid, most preferably the aromatic dicarboxylic acids. Among the aromatic acids, those with 8-16 carbon atoms are preferred, particularly the benzene dicarboxylic acids, i.e. phthalic, terephthalic and isophthalic acids and their dimethyl derivatives. Especially preferred is dimethyl terephthalate.

Finally, where mixtures of dicarboxylic acids are employed, it is preferred that at least about 60 mole %, preferably at least about 60 mole %, based on 100 mole % of dicarboxylic acid (b) be of the same dicarboxylic acid or ester derivative thereof. As mentioned above, the preferred copolyetheresters are those in which dimethylterephthalate is the predominant dicarboxylic acid.

Suitable long chain ether glycols (c) which can be used in the preparation of the thermoplastic elastomers are preferably poly(oxyalkylene)glycols and copoly(oxyalkylene)glycols of molecular weight of from about 400 to 12000. Preferred poly(oxyalkylene) units are derived from long chain ether glycols of from about 900 to about 4000 molecular weight and having a carbon-to-oxygen ratio of from about 1.8 to about 4.3, exclusive of any side chains.

Representative of suitable poly(oxyalkylene)-glycols are poly(ethylene ether)glycol; poly(propylene ether) glycol; poly(tetramethylene ether)glycol; randon or block copolymers of ethylene oxide and propylene oxide, including ethylene oxide end capped poly(propylene ether)glycol and predominately poly(ethylene ether)backbone, copoly(propylene ether-ethylene ether)glycol; and random or block copolymers or tetrahydrofuran with minor amounts of a second monomer such as ethylene oxide, propylene oxide, or methyltetrahydrofuran (used in proportions such that the carbon-to-oxygen ratio does not exceed about 4.3). Polyformal glycols prepared by reacting formaldehyde with diols such as 1,4-butanediol and 1,5-pentanediol are also useful. Especially preferred poly(oxyalkylene)glycols are poly(propylene ether)-glycol, poly-(tetramethylene ether)glycol and predominately poly(ethylene ether) backbone copoly(propylene ether-ethylene ether)glycol.

Optionally, these copolyetheresters may have been incorporated therein one or more caprolactones or polycaprolactones.

Caprolactones (d) suitable for use herein are widely available commercially, e.g., from Union Carbide Corporation and Aldrich Chemicals. While epsilon caprolactone is especially preferred, it is also possible to use substituted caprolactones wherein the epsilon caprolactone is substituted by a lower alkyl group such as a methyl or ethyl group at the alpha, beta, gamma, delta or epsilon positions. Additionally, it is possible to use polycaprolactone, including homopolymers and copolymers thereof with one or more components, as well as hydroxy terminated polycaprolactone, as block units in the novel copolyetheresters of the present invention. Suitable polycaprolactones and processes for their production are described in, for example, U.S. Pat. Nos. 3,761,511; 3,767,627, and 3,806,495 herein incorporated by reference.

In general, suitable copolyetheresters elastomers(A) are those in which the weight percent of (c) long chain ether glycol component or the combined weight percent (c) long chain ether glycol component and (d) caprolactone component in the copolyetheresters is from about 5 to about 70 weight percent. Preferred compositions are those wherein the weight percent of (c) or (c) and (d) is from about 10 to about 50 weight percent. Where both (c) long chain ether glycol and (d) caprolactone are present, each will comprise from about 2 to about 50 percent by weight, preferably from about 5 to about 30 percent by weight, of the copolyetheresters.

As described above, the copolyetheresters may be prepared by conventional esterification/condensation reactions for the production of polyesters. Exemplary of the processes that may be practiced are as set forth in, for example, U.S. Pat. Nos. 3,023,192; 3,763,109; 3,651,014; 3,663,653 and 3,801,547, herein incorporated by reference. Additionally, these compositions may be prepared by such processes and other

known processes to effect random copolymers, block copolymers or hybrids thereof wherein both random and block units are present. For example, it is possible that any two or more of the foregoing monomers/reactants may be prereacted prior to polymerization of the final copolyetheresters. Alternatively, a two-part synthesis may be employed where in two different diols and/or dicarboxylic acids are each prereacted in separated reactors to form two low molecular weight prepolymers which are then combined with the long chain ether glycol to form the final tri-block copolyetheresters.

The foregoing thermoplastic elastomers (A) are modified in accordance with the teachings of the instant invention by admixing therewith a modifying amount of a combination (B) of (i) one or more thermoplastic poly(butylene terephthalate) homopolymer or copolymer, (ii) one or more monoalkenyl arene-conjugated diene rubbery copolymer, and (iii) one or more polycarbonate resins.

While poly(1,4-butylene terephthalate)homopolyester is the preferred poly(butylene terephthalate) polymer, copolyesters thereof are also suitable. Such copolyesters generally comprise at least about 70 mole percent, and preferably at least 80 mole percent, based on total monomer content, of butylene and terephthalate units. The comonomer may be either a dicarboxylic acid or diol or a combination of the two. Suitable dicarboxylic acid comonomers include the $C_8$ to $C_{16}$ aromatic dicarboxylic acids, especially the benzene dicarboxylic acid, i.e. phthalic and isophthalic acids and their alkyl, e.g. methyl, derivatives and $C_4$ to $C_{16}$ aliphatic and cycloaliphatic dicarboxylic acids including the example sebacic acid; glutaric acid; azelaeic acid; tetramethyl succinic acid; 1,2-, 1,3- and 1,4-cyclohexane dicarboxylic acids and the life, as mentioned above. Suitable diol comonomers include but are not limited to $C_2$ to $C_8$ aliphatic and cycloaliphatic diols, e.g. ethylene glycol, hexanediol, butanediol and 1,2-, 1,3-and 1,4-cyclohexanedimethanol. Other suitable diols are as mentioned above for the preparation of the copolyetherester elastomer.

The monoalkenyl arene-conjugated diene copolymers suitable for use in the present invention are selected from ABA type block copolymers and core-shell type copolymers. Further, the term, "monoalkenyl arene-conjugated diene" copolymers is intended to include copolymers having addition comonomers therein as long as both monoalkenyl arene monomers and conjugated diene monomers are each present in an amount of at least about 10 mole percent based on total monomer content of the copolymer.

As stated above, suitable block copolymers (B)-(ii)(a) comprise at least two monoalkenyl arene polymer end blocks A and at least one hydrogenated, partially hydrogenated or non-hydrogenated conjugated diene polymer mid block B, said block copolymer having an 8 to 55 percent by weight monoalkenyl arene polymer block content, each polymer block A having an average molecular weight of between about 5,000 and about 125,000, and each polymer block B having an average molecular weight of between about 10,000 and about 300,000.

These block copolymers may have a variety of geometrical structures, since the invention does not depend on any specific geometrical structure, but rather upon the chemical constitution of each of the polymer blocks. Thus, the structures may be linear, radial or branched so long as each copolymer has at least two polymer end blocks A and at least one polymer mid block B as defined above. The specific structure of the polymers is determined by their methods of polymerization. For example, linear polymers result by sequential introduction of the desired monomers into the reaction vessel when using such initiators as lithium-alkyls or dilithiostilbene and the like, or by coupling a two segment block copolymer with a difunctional coupling agent. Branched structures, on the other hand, may be obtained by the use of suitable coupling agents having a functionality with respect to the polymers or precursor polymers where hydrogenation of the final block polymer is desired, of three or more. Coupling may be effected with multifunctional coupling agents such as dihaloalkanes or dihaloalkenes and divinyl benzene as well as certain polar compounds such as silicon halides, siloxanes or esters or monohydric alcohols with carboxylic acids. The presence of any coupling residues in the polymer may be ignored for an adequate description of the polymers forming a part of the composition of this invention. Likewise, in the generic sense, the specific structures also may be ignored.

Various methods, including those as mentioned above, for the preparation of the block copolymers are known in the art. For example, such polymers, including processes for the hydrogenation thereof, where desired, are disclosed in U.S. Patent Numbers 3,149,182; 3,595,947; 3,694,523; 3,287,333; 3,321, 635 and 3,842,029, all incorporated herein by reference. In such processes, particular preference is made to the use of lithium based catalysts and especially lithium alkyls for the preparation of the block polymers.

Exemplary of typical species of block copolymers there may be given:

polystyrene-polybutadiene-polystyrene (SBS);
polystyrene-polyisoprene-polystyrene (SIS);
poly(alpha-methylstyrene)-polybutadiene-poly(alpha-methylstyrene); and
poly(alpha-methylstyrene)-polyisoprene-poly(alpha-methylstyrene).

It will be understood that both block A and B may be either homopolymer or random copolymer blocks as long as each block predominates in at least one class of the monomers characterizing the blocks and as long as the A block individually predominate in monoalkenyl arenes and the B blocks individually predominate in dienes. The term "monoalkenyl arene" will be taken to include especially styrene and its analogs and homologs including alpha-methylstyrene and ring-substituted styrenes, particularly ring-methylated styrenes. The preferred monoalkenyl arenes are styrene and alpha-methylstyrene, and styrene is particularly preferred. The B blocks may comprise homopolymers of butadiene or isoprene and copolymers of one of these two dienes with a monoalkenyl arene as long as the B blocks predominate in conjugated diene units. When the monomer employed is butadiene, it is preferred that between about 35 and about 55 mole percent of the condensed butadiene units in the butadiene polymer block have 1,2 configuration. Thus, when a hydrogenated or partially hydrogenated block copolymer is desired, it is or has segments which are or resemble as regular copolymer block of ethylene and butene-1 (EB). If the conjugated diene employed is isoprene, the resulting hydrogenated product is or resembles a regular copolymer block of ethylene and propylene (EP).

When hydrogenation of the block copolymer is desired, it may be and is preferably effected by use of a catalyst comprising the reaction products of an aluminum alkyl compound with nickel or cobalt carboxylates or alkoxides under such conditions as to preferably substantially completely hydrogenate at least 80% of the aliphatic double bonds while hydrogenating no more than about 25% of the alkenyl arene aromatic double bonds. Preferred hydrogenated block copolymers are those where at least 99% of the aliphatic double bonds are hydrogenated while less than 5% of the aromatic double bonds are hydrogenated.

The average molecular weights of the individual blocks may vary within certain limits. In most instances, the monoalkenyl arene blocks will have number average molecular weights in the order of 5,000-125,000, preferably 7,000-60,000, while the conjugated diene blocks either before or after hydrogenation will have average molecular weights in the order of 10,000-300,000, preferably 30,000-150,000. The total average molecular weight of the block copolymer is typically in the order of 25,000 to about 350,000, preferably from about 35,000 to about 300,000. These molecular weights are most accurately determined by tritium counting methods or osmotic pressure measurements.

The proportion of the monoalkenyl arene blocks should be between about 8 and 55% by weight of the block copolymer, preferably between about 10 and 30% by weight.

The second class of monoalkenyl arene-conjugated diene copolymers (B)(ii) are of the core-shell type. In general these are characterized as having a predominately conjugated diene rubbery core and one or more shells graft polymerized thereon and derived from monoalkenyl arene monomers alone or, preferably, in combination with other vinyl monomers.

More particularly, the first or core phase of the core-shell copolymer comprises polymerized conjugated diene units of one or more conjugated dienes alone or copolymerized with units of a vinyl monomer or mixture of vinyl monomers. Suitable conjugated dienes for use in said core phase include butadiene, isoprene, 1,3-pentadiene and the like. Illustrative of the vinyl monomers copolymerizeable therewith include the vinyl aromatic compounds such as styrene, alpha-methylstyrene, vinyl toluene, para-methylstyrene and the like; esters of acrylic and methacrylic acid, including for example methyl acrylate, ethyl acrylate, butyl acrylate, methyl methacrylate and ethyl methacrylate; and unsaturated aliphatic nitriles such as acrylonitrile, methacrylonitrile and the like. The core of said copolymer should comprise at least about 50 percent by weight of the conjugated diene. Preferred grafted core-shell copolymers for use herein comprise a core of polybutadiene homopolymer or a styrene-butadiene copolymer comprising about 10 to 50% by weight styrene and about 90 to 50% by weight of butadiene, having a molecular weight of from about 150,000 to about 500,000. The core phase may also include a cross-linking monomer, more particularly described below.

The final or shell phase of the copolymer comprises polymerized units of a monoalkenyl arene alone or copolymerized with one or more other vinyl monomers wherein at least 10 mole percent of the graft component is derived from the monoalkenyl arene monomer. Preferred monoalkenyl arene monomers are styrene, alpha-methylstyrene, para-methylstyrene and the like, most preferably styrene. Additional monomers that may be copolymerized therewith in an amount up to 90 mole % include the esters of acrylic and methacrylic acid including for example, ethyl acrylate, methyl actylate, butyl actylate, methyl methacrylate, ethyl methacrylate, butyl methacrylate and the like, unsaturated aliphatic nitrile such as acrylonitrile and methacrylonitrile and vinyl halides such as vinyl chloride and vinyl bromide. Especially preferred shells are those derived from polymerized units of styrene and methyl methacrylate wherein each is present in an amount of from 10 to 90 mole %. Additionally, these shells may also have copolymerized therewith a minor amount, preferably less than 10 mole % of one or more of the other aforementioned monomer units. As with the core, the shell phase may also include a cross-linking monomer as discussed more fully below.

Optionally, the core-shell copolymers may further comprise one or more cross-linked or non-cross linked intermediate layers which is grafted to the core and upon which the final shell layer is grafted, comprised of one or more polymerized vinyl monomer. Suitable vinyl monomers for one in these intermediate layers include but are not limited to those mentioned above, especially polystyrene. Where such intermediate layers are present in the core-shell copolymer and are derived from at least 10 mole % of a monoalkenyl arene monomer, the final or shell phase may comprise up to and including 100 mole % monomer units which are not monoalkenyl arene units. Especially preferred in such instances are multiphase copolymers wherein the intermediate phase comprises polystyrene and the final stage comprises polymethylmethacrylate.

As mentioned each of the individual stages of the core-shell copolymers may contain a cross-linking monomer which may serve not only to cross-link the units of the individual layers but also graft-link the shell to the core. As the cross-linking agent for use in preparation of the core-shell copolymers, those which copolymerize smoothly with the monomer in the respective stages of the reaction should be selected. Representative cross-linking agents including, but are not limited to aromatic polyfunctional vinyl compounds such as divinyl benzene, trivinyl benzene, divinyl toluene and the like; di- and tri-methacrylates and di and triacrylates of polyols represented by monoethylene-, diethylene- and triethylene glycols, 1,3-butanediol and glycerin allyl esters of unsaturated aliphatic carboxylic acid such as allyl acrylate, allyl methacrylate and the like and di- and triallyl compounds such as diallyl phthalate, diallyl sebacate, triallytriazine and the like are mentioned.

While the amount of cross-linking agent employed is from about 0.01 to 3.0% by weight based on the monomer charge for each stage of the reaction, generally, the total amount of cross-linking agent in the final graft copolymer will preferably be less than 3.0 weight percent.

The core-shell copolymers suitable for use herein generally comprise from about 50 to about 90 weight percent of the core and from about 10 up to 50 weight percent of the graft or shell phase. Where an intermediate phase or layer is present in the graft copolymer the shell and intermediate phase will each comprise from about 5 to about 25 weight percent of the copolymer.

The core-shell graft copolymers for use in the present invention are prepared by the conventional method of emulsion polymerization, however, in an alternative method, graft copolymerization may be carried out after suitably coagulating the latex of cross-linked trunk polymer for adjusting the size of the latex particles of the trunk polymer.

Also, during polymerization the monomeric components used in the graft copolymerization may be brought into reaction in one step, or in multiple steps while supplying them in portions of suitable ratio of the present invention between the components.

Specific examples of suitable core-shell graft copolymers and the production thereof are disclosed in for example U.S. Patent Numbers 4,180,494 and 4,292,233; herein incorporated by reference. Commercially available grafted core-shell copolymers for use herein include the KM653 and KM611 from Rohm and Haas Chemical Company.

Polycarbonates suitable for use in the present invention are any of those known in the art. Especially preferred polycarbonates are high molecular weight, thermoplastic, aromatic polymers and include homopolycarbonates, copolycarbonates and copolyestercarbonates and mixtures thereof which have average molecular weights of about 8,000 to more than 200,000, preferably of about 20,000 to 80,000 and an I.V. of 0.30 to 1.0 d1/g as measured in methylene chloride at 25 C. In one embodiment, the polycarbonate are derived from dihydric phenols and carbonate precursors and generally contain recurring structural units of the formula;

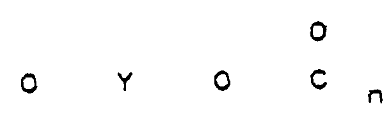

where Y is a divalent aromatic radical remaining after removal of the hydroxy groups from the dihydric phenol employed in the polycarbonate producing reaction, and n is greater than 1, and is preferably from about 10 to about 400.

Preferred polycarbonate resins are of the formula :

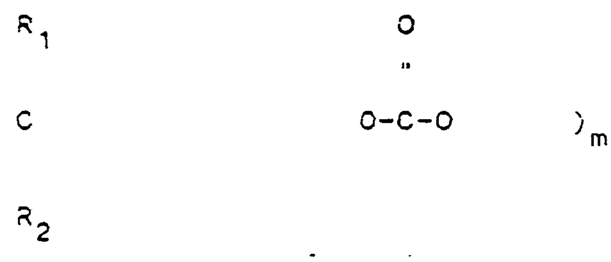

wherein $R_1$ and $R_2$ are independently hydrogen, (lower) alkyl or phenyl and m is at least 30 and preferably between 40 and 300. The term (lower) alkyl includes hydrocarbon groups of from 1 to 6 carbon atoms.

Suitable dihydric phenols for producing polycarbonates include, for example,
2,2-bis(4-hydroxyphenyl)propane,
bis(4-hydroxyphenyl) methane,
2,2-bis(4-hydroxy-3-methylphenyl)propane,
4,4-bis(4-hydroxyphenyl) heptane,
2,2-(3,5,3′,5′-tetrachloro-4,4′-dihydroxyphenyl)propane, 2,2-(3,5,3′5′-tetrabromo-4,4′-dihydroxyphenol)-propane, and 3,3′- dichloro-4,4′-dihydroxydiphenyl)methane.

Other dihydric phenols which are also suitable for use in the preparation of the above polycarbonates are disclosed in U.S. Patent Nos. 2,999,835; 3,038,365; 3,334,154; and 4,131,575, incorporated herein by reference.

It is, of course, possible to employ two or more different dihydric phenols or a copolymer of a dihydric phenol with a glycol or with a hydroxy or acid terminated polyester, or with a diabasic acid in the event a carbonate copolymer or interpolymer rather than a homopolymer is desired for use in the preparation of the blends of the invention. Blends of any of the above materials can also be employed to provide the aromatic polycarbonate. In addition, branched polycarbonates such as are described in U.S. Patent No. 4,001,184, can also be utilized in the practice of this invention, as can blends of a linear polycarbonate and branched polycarbonate.

The carbonate precursor employed can be either a carbonyl halide, a carbonate ester or a haloformate. The carbonyl halides which can be employed are carbonyl bromide, carbonyl chloride and mixtures thereof. Typical of the carbonate esters which can be employed are diphenyl carbonate; a di(halophenyl)carbonate such as di(trichlorophenyl) carbonate, di(tribromophenyl)carbonate, etc.; di(alkylphenyl) carbonate such as di(tolyl)carbonate, etc,; di(naphthyl)carbonate; di(chloronaphthyl)carbonate; etc., or mixtures thereof. The suitable haloformated include bis-haloformates of dihydric phenols (bischloroformates of hydroquinone, et.) or glycols (bishaloformates of ethylene glycol, neopentyl glycol, polyethylene glycol, etc.). While other carbonate precursors will occur to those skilled in the art, carbonyl chloride, also known as phosgene, is preferred.

The polycarbonate may also be a copolyestercarbonate as described by Clayton B. Quinn in U.S. Patent 4,430,484 and Kenneth Miller in U.S. Patent No. 4,465,820. and the references cited therein, incorporated herein by reference. Preferred polyestercarbonates are those derived from the dihydric phenols and carbonate precursors described above and aromatic dicarboxylic acids or their reactive derivatives, such as the acid dihalides, e.g. dichlorides. A quite useful class of polyestercarbonates are the aromatic polyester carbonates derived from bisphenol A; terephthalic acid or isophthalic acid or a mixture thereof or their respective acid chlorides; and phosgene. If a mixture of terephthalic acid and isophthalic acid is employed, the weight ratio of terephthalic acid to isophthalic acid may be from about 2:8 to about 8:2.

The polycarbonates of the subject blends can be manufactured by known processes, such as, for example, by reacting a dihydric phenol with a carbonate precursor such as diphenyl carbonate or phosgene in accordance with methods set forth in the above-cited literature and U.S. Patent Nos. 4,018,750 and 4,123,436, or by transesterification processes such as are disclosed in the U.S. Patent No. 3,153,008, as well as other processes known to those skilled in the art. The aromatic polycarbonates are typically prepared by employing a molecular weight regulator, an acid acceptor and a catalyst. The molecular weight regulators which can be employed include phenol, cyclohexanol, methanol, alkylated phenols, such as octylphenol, paratertiary-butyl-phenol, etc. Preferably, phenol or an alkylated phenol is employed as the molecular weight regulator.

The acid acceptor can be either an organic or an inorganic acid acceptor. A suitable organic acid acceptor is a tertiary amine and includes such materials as pyridine, triethylamine, dimethylaniline, tributylamine, etc. The inorganic acid acceptor can be one which can be either a hydroxide, a carbonate, a

bicarbonate, or a phosphate of an alkali or alkaline earth metal.

The catalyst which can be employed are those that typically aid the polymerization of the monomer with phosgene. Suitable catalysts include tertiary amines such as triethylamine, tripropylamine, N,N-dimethylaniline, quanternary ammonium compounds such as, for example, tetraethylammonium bromide, cetyl triethyl ammonium bromide, tetra-n-heptylammonium iodide, tetra-n-propyl ammonium bromide, tetramethyl-ammonium chloride, tetra-methyl ammonium hydroxide, tetra-n-butyl ammonium iodide, benzyltrimethyl ammonium chloride and quaternary phosphonium compounds such as, for example, n-butyltriphenyl phosphonium bromide and methyltriphenyl phosphonium bromide.

Also included are branched polycarbonates wherein a polyfunctional aromatic compound is reacted with the monomer and carbonate precursor to provide a thermoplastic randomly branched polycarbonate. The polyfunctional aromatic compounds contain at least three functional groups which are carboxyl, carboxylic anhydride, haloformyl, or mixtures thereof. Illustrative polyfunctional aromatic compounds which can be employed include trimellitic anhydride, trimellitic acid, trimellityl trichloride, 4-chloroformyl phthalic anhydride, promellitric acid, pyromellitic dianhydride, mellitic acid, mellitic anhydride, trimesic acid, benzophenonetetracarboxylic acid, benxophenonetetracarboxylic anhydride, and the like. The preferred polyfunctional aromatic compounds are trimellitic anhydride and trimellitic acid or their acid halide derivatives.

Any amount of the modifier combination (B) will improve the low temperature properties of the copolyetherester resin. Preferably, the modifier combination (B) comprises from about 10 to about 85 weight percent, most preferably from about 30 to about 70 weight percent, based on the total composition. Individually, the modifiers comprising the modifier combination will each be present as follows:

The poly(butylene terephthalate) (B)(i) comprises from about 5 to about 60, preferably from about 10 to about 50, percent by weight of the total composition; the monoalkenyl arene-conjugated diene copolymer-(B)(ii) comprises from about $2\frac{1}{2}$ to about 30, preferably from about 10 to about 15, percent by weight of the total composition; and the polycarbonate resin comprises from about $2\frac{1}{2}$ to about 60, preferably from about 10 to about 50 weight percent based on the total weight of the composition.

In a most preferred embodiment, where a core-shell copolymer is employed as a monoalkenyl arene-conjugated diene copolymer (B)(ii), it is desirable to precompound the core-shell copolymer with the poly-(butylene terephthalate) or a portion thereof. As identified by Yusa et al. (U.S. 4,442,262), the use of core-shell copolymers is general with copolyetheresters results in the occurrence of surface roughness and fisheyes. In practice most any ratio of core-shell copolymers to poly(butylene terephthalate) may be used; however, it is preferred that the ratio of 4:1 to 1:4, most preferably 3:2 to 2:3, be employed to provide greater dispersibility of the core-shell copolymer in the final composition.

Finally, while the foregoing is concerned with precompounding of the core-shell copolymer, the concept of precompounding is equally applicable to the block copolymer. Similarly, it is anticipated that the precompounding of the block copolymer with the poly(butylene terephthalate) will result in enhanced physical properties due to the improved dispersibility thereof.

The instant compositions may also optionally contain such commonly known and used additives as oxidative stabilizers; thermal stabilizers, ultraviolet radiation stabilizers; and fillers.

Many of the oxidative and/or thermal stabilizers known in the art for copolyesters may be used in the practice of the present invention. These may be incorporated either during polymerization or while in a hot melt stage following polymerization. Satisfactory stabilizers of this type include the phenols and their derivatives, compounds containing both hydroxyl and amine groups, hydroxyazines, oximes, polymeric phenolic esters, and salts of multivalent metals in which the metal is in its lower valence state. Some specific examples of these stabilizers are described in U.S. Patent No. 4,556,688, incorporated herein by reference.

The ultraviolet radiation stabilizers include, but are not limited to, the benzophenone derivatives, benzotriazole derivatives , and cyanoacrylates.

The fillers include, but are not limited to, carbon black, silica gel, alumina, clays, talc, and chopped fiberglass or glass particles. These fillers may be incorporated in amounts up to about 50 weight percent, preferably up to about 30 weight percent.

The compositions of the present invention may be prepared by any of the well-known techniques for preparing the polymer blends or admixtures, with extrusion blending being preferred. Suitable devices for the blending include single screw extruders, twin screw extruders, internal mixers such as the Bambury Mixer, heated rubber mills (electric of oil heat) or Farrell continuous mixers. Injection molding equipment can also be used to accomplish blending just prior to molding, but care must be taken to provide sufficient time and agitation to insure uniform blending prior to molding.

Alternatively, the ingredients may be dry blended prior to extrusion or injection molding.

Finally, as mentioned above, the modifier combination may be pre-compounded prior to compounding

with the resin (A).

## DESCRIPTION OF THE PREFERRED EMBODIMENT

The following examples are presented to more fully and clearly illustrate the present invention. They are presented as illustrative of the invention and are not to be construed as limiting the invention thereto. In the examples all parts and percentages are on a weight basis unless otherwise specified.

All compositions were prepared by melt blending the various components in a Prodex single screw extruder.

Physical properties of these compositions were determined in accordance with ASTM methods as follows:

Notched Izod ASTM D256
Flexural Modulus ASTM D790
Tensile Strength ASTM D638
Tensile Elongation ASTM D638

Dynatub is a measure of stress-strength properties of the composition and is expressed as Emax/Etotal wherein Emax is the maximum energy the standard part can withstand under deflection before permanent deformation (i.e., non-recoverable deflection) and Etotal is the total energy the part can withstand before mixture.

In all examples, the stabilizers that were used were phenolic and/or amine stabilizers typical for such compositions.

Example 1 is outside the scope of the present invention and illustrates the prior art compositions which did not contain the polycarbonate component in the modifier composition. In Examples 1 and 2, the copolyetherester resin which was utilized had a modulus of 50,000. In Example 3, the copolyetherester resin utilized had a modulus of 10,000. (Table 1 sets forth the composition of each of the Examples 1 through 3, inclusive. Table 2 sets forth the physical characteristics of each of the compositions.)

TABLE 1

| | EXAMPLE NO. | | |
|---|---|---|---|
| | 1 | 2 | 3 |
| CPE | 31 | 19.2 | 19.2 |
| KM 653/315 | 27.5 | 30 | 30 |
| Lexan 101 | -- | 49 | 49 |
| Valox 315 | 31 | -- | -- |
| Stabilizer | 0.5 | 0.5 | 0.5 |
| P | -- | 0.3 | 0.3 |
| Pigment | 1.0 | 1.0 | 1.0 |

CPE is a copolyetherester resin.

KM 653/315 is a concentration of a butadiene based core-shell impact modified (KM 653 from Rohn & Haas) in a poly(butylene terephthalate) resin from General Electric Company (Valox® 315) in a 50:50 weight ratio.

Lexan® 101 is a polycarbonate resin from General Electric Company.

P is a phosphate stabilizer.

The Stabilizer used was a nindered phenolic stabilizer.

TABLE 2

| | EXAMPLE NO. | | |
|---|---|---|---|
| | 1 | 2 | 3 |
| 1/4" Notched Izod, Room Temp., ft. lbs/in. | 15.2 | 11.3 | 9.8 |
| 1/4" Notched Izod, -30 C, ft. lbs/in. | 2.0 | 6.1 | 5.3 |
| Dynatub, -30 C Emax/Etotal | 9/9 | 31/35 | 29/33 |
| Tensile Strength, psi | 5.2K | 7.5K | 7.25K |
| Tensile Elongation,% | 290 | 180 | 140 |
| Flexural Modulus, psi | 211K | 286K | 258K |

An example of the data set forth in Table 2 indicates that the compositions of the present invention which contain a polycarbonate in the modifier combination for the polyetherester resin show an unexpected improvement in low temperature properties, as set forth in the data for the low temperature Notched Izod test and the Dynatub test.

Obviously, other modifications and variations of the present invention are possible in light of the above teachings. It is therefore to be understood that changes may be made in the particular embodiments of the invention described which are within the full intended scope of the invention as defined by the appended claims.

## Claims

1. A thermoplastic molding composition comprising:

(A) at least one or more copolyetheresters elastomers derived from:

(a) one or more diols;

(b) one or more dicarboxylic acids or the ester derivatives thereof;

(c) one or more long chain ether glycols having a molecular weight of from about 400 to about 12000;

(d) optionally, one or more caprolactones, wherein the long chain ether glycol and caprolactone, if any, comprise from about 5 to about 70 weight percent of the copolyetheresters; and

(B) a modifier combination consisting essentially of:

(i) one or more poly(butylene terephthalate) homopolyesters or copolyesters;

(ii) one or more of a monoalkenyl arene-conjugated diene rubber copolymer selected from the group consisting of:

(a) a block polymer comprising at least two monoaklenyl arene polymer end block A and at least one hydrogenated partially hydrogenated or non-hydrogenated conjugated diene polymer mid block B, said block copolymer having an 8 to 55 percent by weight monoalkenyl arene polymer block content, each polymer block A having an average molecular weight of between 5,000 and 125,000, and each polymer block B having an average molecular weight of between about 10,000 and about 300,000; and

(b) a core-shell graft copolymer comprising a predominately conjugated diene polymer core to which is grafted a shell polymerized from one or more monomers at least one of which is a monoalkenyl arene; and

(iii) at least one polycarbonate resin.

2. The composition of Claim 1 wherein the poly(butylene terephthalate) comprises from about 5 to about 60 percent by weight of the total composition, (b) the monoalkenyl arene-conjugated diene copolymer comprises from about $2\frac{1}{2}$ to about 30 percent by weight of the total composition, and (c) the polycarbonate resin composition comprises from about $2\frac{1}{2}$ to about 60 percent by weight of the total composition.

3. The composition of Claim 1 wherein the modifying combination (B) comprises from about 10 to about 85 percent by weight of the total composition.

4. The composition of Claim 1 wherein the poly(butylene terephthalate) is poly(1,4-butylene terephthalate) homopolyester.

5. The composition of Claim 1 wherein the monoalkenyl arene-conjugated diene copolymer is a block copolymer.

6. The composition of Claim 5 wherein the block copolymer is polystyrene-polybutadiene-polystyrene block copolymer.

7. The composition of Claim 1 wherein the monoalkenyl arene-conjugated diene copolyner is a core-shell copolymer.

8. The composition of Claim 7 wherein the core-shell copolymer is comprised of a polybutadiene core having polymerized thereon a shell derived from styrene and methylmethacrylate units.

9. The composition of Claim 7 wherein the core-shell copolymer is comprised of a poly(butadiene-styrene) core having polymerized thereon a shell derived from styrene and methylmethacrylate.

10. The composition of Claim 1 wherein the monoalkenyl arene-conjugated diene copolymer is precompounded with at least a portion of the poly(butylene terephthalate).

11. The composition of Claim 10 wherein the monoalkenyl arene-conjugated diene copolymer is a core-shell copolymer.

12. The composition of Claim 1 wherein the aromatic polycarbonate resin is derived from a diphenol and phosgene or a phosgene precursor.

13. The composition of Claim 12 wherein the aromatic polycarbonate resin is poly(biphenol A)-carbonate.

14. The composition of Claim 1 wherein the copolyetherester elastomer is derived from:

(a) one or more $C_2$ to $C_{19}$ aliphatic or cycloaliphatic diols;

(b) one or more $C_4$ to $C_{36}$ dicarboxylic acids;

(c) one or more poly(alkylene ether)glycols having a molecular weight of from about 900 to about 4000; and

(d) optionally, one or more caprolactones, wherein:

(i) at least 60 mole percent of the diols are the same;

(ii) at least 60 mole percent of the dicarboxylic acids are the same; and

(iii) the combined amount of long chain ether glycol and caprolactone, if any, in the copolyetheresters is from about 10 to about 50 weight present.

15. The composition of Claim 14 wherein at least about 80 mole percent of the diols and at least about 80 mole percent of the dicarboxylic acids are the same.

16. The composition of Claim 14 wherein the predominant dicarboxylic acid is dimethylterephthalate.

17. The composition of Claim 14 wherein the poly(alkylene ether)glycol is selected from the group consisting of poly(ethylene ether)glycol, poly(propylene ether)glycol, poly(tetramethylene ether)glycol and copoly(propylene ether-ethylene ether)glycol.

18. The composition of Claim 14 wherein the poly(alkylene ether) glycol is poly(tetramethylene ether)-glycol.

19. The composition of Claim 1 wherein the copolyetheresters contains a caprolactone in an amount of from about 2 to about 50 percent by weight.

20. The composition of Claim 8 wherein the caprolactone is epsilon caprolactone.

21. The composition of claim 1 which further contains an effective stabilizing amount of at least one thermal stabilizer.

22. The composition of claim 1 which further contains a filler.

European Patent Office

# EUROPEAN SEARCH REPORT

Application Number

EP 89 10 3165

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 237 306 (CELANESE ENGINEERING RESINS)<br>* Claims 1-14 * | 1-4,7-22 | C 08 L 67/00 //<br>(C 08 L 67/00<br>C 08 L 67:02<br>C 08 L 51:04<br>C 08 L 69:00 )<br>(C 08 L 67/00<br>C 08 L 67:02<br>C 08 L 53:02<br>C 08 L 69:00 ) |
| X | EP-A-0 192 065 (IDEMITSU PETROCHEMICAL CO.)<br>* Claims 1-24 * | 1-6,12-22 | |
| A | GB-A-2 039 918 (GENERAL ELECTRIC)<br>* Claims 1-14 * | 1,5,6 | |

TECHNICAL FIELDS SEARCHED (Int. Cl.5)

C 08 L

The present search report has been drawn up for all claims

| Place of search | Date of completion of the search | Examiner |
|---|---|---|
| THE HAGUE | 11-10-1989 | DECOCKER L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document